# EUROPEAN PATENT APPLICATION

(11) **EP 1 133 149 A2**
(43) Date of publication of application: **12.09.2001**
(21) Application number: 00128254.0
(22) Date of filing: 22.12.2000
(51) Int. Cl.: H04N 1/21, H04N 1/00, H04N 101/00

(54) **Recording device recording still images and videos in correspondence and reproducing device reproducing the same**

(30) Priority: 27.12.1999 JP 36965099
(71) Applicant: Sharp Kabushiki Kaisha, Osaka-shi Osaka (JP)
(72) Inventor: Ueda, Toru, Soraku-gun, Kyoto (JP); Terada, Satoshi, Saidaiji, Nara-shi, Nara (JP); Suzuki, Yoshihiro, Joyo-shi, Kyoto (JP)
(74) Representative: MÜLLER & HOFFMANN Patentanwälte

(57) **Abstract**

A reproducing device includes: a communicating portion (33) for communication with a recording device; a still image display portion (31) for displaying a still image received through the communicating portion (33); and a video display portion (37) for receiving a video corresponding to the still image displayed by the still image display portion (31) through the communicating portion (33) for display. The video display portion (37) receives the video corresponding to the still image displayed by the still image display portion (31) through the communicating portion (33), so that a user can reproduce a desired video by a simple operation.

## Description

### BACKGROUND OF THE INVENTION

### Field of the Invention

The present invention relates to a technique for recording/reproducing videos and still images. More particularly, the present invention relates to a recording device recording videos and still images, a reproducing device connected to the recording device through a network for reproducing videos and still images, and a recording and reproducing apparatus with the recording device and reproducing device connected together.

### Description of the Background Art

In recent years, image pickup apparatuses such as video cameras and reproducing apparatuses for reproducing the videos are widely used. Owing to this, demands for more convenient image pickup apparatuses and reproducing apparatuses have been on the increase. A conventional video camera records images onto a tape and reproduces the images by sequentially accessing the tape. It has become also possible that IEEE (Institute of Electrical and Electronic Engineers) 1394, a high speed bus, is mounted onto a digital camera, through which digital videos are transmitted to a data processing apparatus such as a personal computer (PC).

Meanwhile, some of the recent digital video cameras have a function of taking not only videos but also still images. The taken still images are stored in a flash memory of the digital video camera, and read into a PC with use of, for example, a PCMCIA (Personal Computer Memory Card International Association) card. The invention disclosed in Japanese Patent Laying-Open No. 11-187350 relates to this technique.

An image pickup and recording apparatus disclosed in the aforementioned laid-open application is provided with a separate recording medium for recording still images in addition to a tape for recording taken videos, thereby enabling high-definition still images to be readily found.

However, the above mentioned image pickup and recording apparatus separately handles the videos and still images respectively recorded on the tape and the separate recording medium, and correspondence between the videos and still images is not at all considered. Thus, the only method that allows the user to find a target video recorded on the tape is to search it by reproducing the images at high speed, i.e., by conventional forwarding or rewinding.

### SUMMARY OF THE INVENTION

An object of the present invention is to provide a recording device capable of recording a video corresponding to a desired still image.

Another object of the present invention is to provide a recording device capable of automatically producing a desired still image from a video.

Still another object of the present invention is to provide a reproducing device capable of receiving and displaying a video corresponding to a desired still image.

Still another object of the present invention is to provide a reproducing device capable of sequentially displaying videos corresponding to a plurality of still images.

Still another object of the present invention is to provide a recording and reproducing apparatus capable of recording/reproducing a video corresponding to a desired still image.

According to one aspect of the present invention, a recording device includes: a still image recording portion for recording a still image; a video recording portion for recording a video; an information recording portion for recording information on a correspondence between the still image recorded by the still image recording portion and the video recorded by the video recording portion; a communicating portion for communication with an external apparatus; and a command executing portion for interpreting a command received from the external apparatus through the communicating portion and selectively transmitting the still image recorded by the still image recording portion, the video recorded by the video recording portion, and the information recorded in the information recording portion.

The command executing portion selectively transmits the still image, video, and information respectively recorded by the still image recording portion, video recording portion and information recording portion, so that the external apparatus can selectively receive and display the video corresponding to the still image.

According to another aspect of the present invention, a reproducing device includes: a communicating portion for communication with an external apparatus; a still image display portion for displaying the still image received through the communicating portion; and a video display portion for receiving through the communicating portion a video corresponding to the still image displayed by the still image display portion for display.

The video display portion receives through the communicating portion the video corresponding to the still image displayed by the still image display portion for display, so that a user can reproduce a desired video by a simple operation.

According to still another aspect of the present invention, a recording and reproducing apparatus with a recording device and a reproducing device connected through a network is provided. The recording device includes: a still image recording portion for recording a still image; a video recording portion for recording a video; an information recording portion for recording information on a correspondence between the still image recorded by the still image recording portion and the video recorded by the video recording portion; a first communicating portion for communication with the reproducing device; and a command executing portion for interpreting a command received from the reproducing device through the first communicating portion and selectively transmitting to the reproducing device the still image, video, and information respectively recorded by the still image recording portion, video recording portion and information recording portion. The reproducing device includes: a second communicating portion for communication with the recording device; a still image display portion for displaying the still image received through the second communicating portion; and a video display portion for receiving the video corresponding to the still image displayed by the still image display portion through the second communicating portion for display.

The video display portion receives the video corresponding to the still image displayed by the still image display portion through the second communicating portion for display, so that a user can reproduce a desired video by a simple operation.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram schematically showing a structure of a recording device according to a first embodiment of the present invention.

Fig. 2 is a block diagram showing a hardware structure of the recording device according to the first embodiment of the present invention.

Fig. 3 is a flow chart shown in conjunction with an image pickup process by the recording device according to the first embodiment of the present invention.

Fig. 4 is a flow chart shown in conjunction with a command receiving process by the recording device according to the first embodiment of the present invention.

Fig. 5 is a block diagram schematically showing a structure of a reproducing device according to a second embodiment of the present invention.

Fig. 6 is a block diagram showing a hardware structure of the reproducing device according to the second embodiment of the present invention.

Fig. 7 is a flow chart shown in conjunction with a display process by the reproducing device according to the second embodiment of the present invention.

Fig. 8 is an illustration showing an exemplary display by the recording device according to the second embodiment of the present invention.

Fig. 9 is an illustration showing that a video 55 corresponding to a still image 51 is displayed on a screen.

Fig. 10 is a flow chart shown in conjunction with a collective reproduction process by the reproducing device according to the second embodiment of the present invention.

Fig. 11 is an illustration shown in conjunction with an exemplary display of the collective reproduction process by the reproducing device according to the second embodiment of the present invention.

Figs. 12A and 12B are diagrams shown in conjunction with a temporal relationship between a still image and a video.

Fig. 13 is a diagram shown in conjunction with the case where a still image is cut out from a video after the video is taken.

Fig. 14 is a diagram showing an exemplary command format used in the reproducing device according to the second embodiment of the present invention.

Fig. 15 is a diagram showing a command format in accordance with Direct Printing Protocol (DPP).

### DESCRIPTION OF THE PREFERRED EMBODIMENTS

### First Embodiment

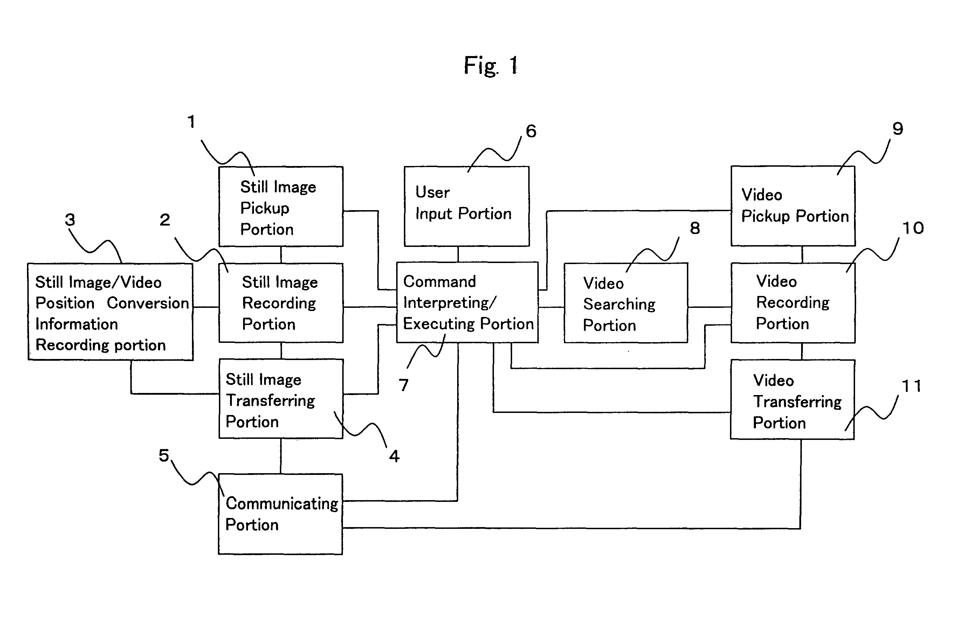

Fig. 1 is a block diagram schematically showing a structure of a recording device according to the first embodiment of the present invention. The recording device includes: a still image pickup portion 1 for taking a still image; a still image recording portion 2 for recording the still image taken by still image pickup portion 1; a still image/video position conversion information recording portion 3 for recording positional information (temporal information) of a video corresponding to the still image; a still image transferring portion 4 for transferring the still image recorded in still image recording portion 2 and information recorded in still image/video position conversion information recording portion 3; a communicating portion 5 for communication with an external apparatus (not shown); a user input portion 6 used by a user to input an instruction; a command interpreting/executing portion 7 for interpreting and executing a command representing a process which should be executed by the recording portion; a video searching portion 8 for searching the video in accordance with a video searching instruction from command interpreting/executing portion 7; a video pickup portion 9 for taking the video; a video recording portion 10 for recording the video taken by video pickup portion 9; and a video transferring portion 11 for transferring the video recorded in video recording portion 10.

Although still image pickup portion 1 corresponds to a pickup apparatus using a CCD (Charge Coupled Device) or the like, it can be used in combination with video pickup portion 9 if the still image is cut out from the video. Still image recording portion 2 includes a flash memory, an RAM (Random Access Memory), a hard disk or the like.

Information used for making the positional information (temporal information) on the recording medium of the currently taken video correspond to the still image is recorded in still image/video position conversion information recording portion 3 along with the still image. Reference to the information provides the positional or temporal information of the video corresponding to the selected still image. The information further includes a file name of the still image and some relevant information thereon.

Still image transferring portion 4 receives arbitrary still image and its relevant information from still image recording portion 2 and still image/video positional information recording portion 3 in accordance with an instruction from command interpreting/executing portion 7 for transmitting them to communicating portion 5. Communicating portion 5 is a network interface which transmits the still image from still image transferring portion 4 or the video from video transferring portion 11 to the external apparatus and receives a command from the external apparatus. Communicating portion 5 is not limited to any particular configuration as long as it is provided with a function of communicating data. For example, it may be a bus such as IEEE 1394.

Instructions to start or end video recording, record the still image and the like are input by a user into user input portion 6. Command interpreting/executing portion 7 interprets a command received from the external apparatus through communicating portion 5 and an instruction of for example recording the still image input to user input portion 6, and instructs to execute the process corresponding to the command and instruction.

Video searching portion 8 searches the video recorded in video recording portion 10 in accordance with the instruction from command interpreting/executing portion 7. In the case of a recording medium which only allows sequential access such as a tape, search would be performed with use of a frame number or time stamp of the video. In the case of a recording medium which allows random access such as a disk, search would be performed with use of pointer information for video access, which is recorded as separate from the video.

Video pickup portion 9 corresponds to a pickup apparatus using a CCD or the like, but may receive external video signals for recording them to video recording portion 10. If the recording medium is a tape or the like which only allows sequential access, image recording portion 10 records information such as time stamp or frame number along with the video. If the recording medium is a disk or the like which allows random access, it records pointer information for video access as separate from the video. Video transferring portion 11 reads arbitrary video recorded in video recording portion 10 in accordance with the instruction from command interpreting/executing portion 7 for transferring it to the external apparatus through communicating portion 5.

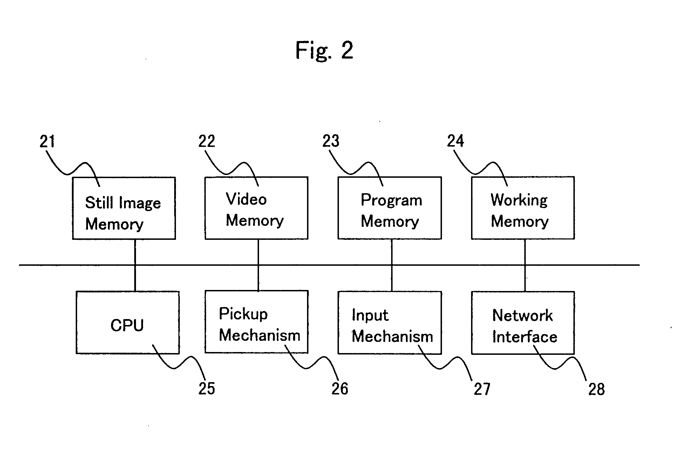

Fig. 2 is a block diagram showing a hardware structure of the recording device according to the present embodiment. The recording device includes: a still image memory 21 recording a still image; a video memory 22 recording a video; a program memory 23 storing a program for generally controlling the recording device; a working memory 24 used as a work area when the program is executed; a CPU (Central Processing Unit) 25 for generally controlling the recording device; a pickup mechanism 26 for taking the video or still image; an input mechanism 27 instructed by a user; and a network I/F (interface) 28.

Still image memory 21 corresponds to still image recording portion 2 and still image/video position conversion information recording portion 3 shown in Fig. 1. Video memory 22 corresponds to video recording portion 10 shown in Fig. 1. Pickup mechanism 26 corresponds to still image pickup portion 1 and video pickup portion 9 shown in Fig. 1. Input mechanism 27 corresponds to user input portion 6 shown in Fig. 1 and is used for obtaining a trigger of, for example starting pickup, from a user. For example, it is in the form of a shutter button. Network I/F 28 corresponds to communicating portion 5 shown in Fig. 1. By executing the program stored in program memory 23 by CPU 25, the functions of still image transferring portion 4, command interpreting/executing portion 7, video searching portion 8 and video transferring portion 11 shown in Fig. 1 can be implemented.

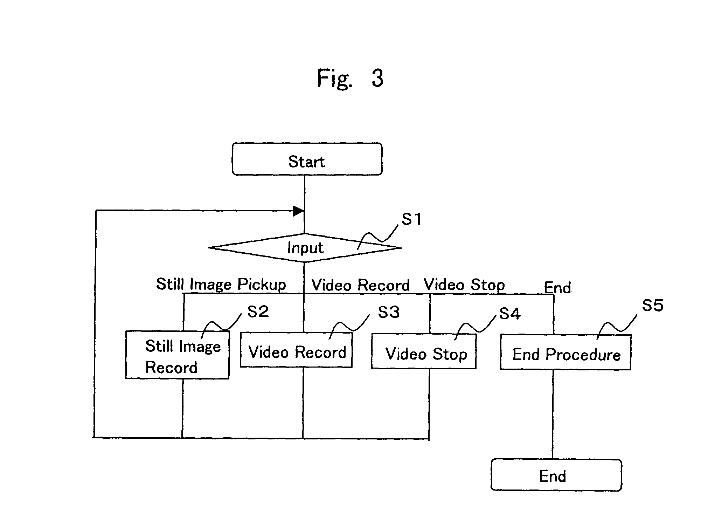

Fig. 3 is a flow chart shown in conjunction with a pickup process by the recording device according to the present embodiment. First, when the operation instruction is input from the user through user input portion 6, the content of the instruction is determined (S1). If the instruction from the user is to record the still image (S1, still image record), the still image is taken by still image pickup portion 1 and recorded in still image recording portion 2 (S2). Then, the process returns to step S1 to wait for the input from the user. It is noted that, when the still image is recorded in still image recording portion 2, the positional information (temporal information) representing a correspondence with respect to the currently taken video or the immediately following video is recorded in still image/video position conversion information recording portion 3.

If the instruction from the user is to record the video (S1, video record), video pickup portion 9 is instructed to start pickup, and recording of the taken video into video recording portion 10 is started (S3). Then, the process returns to S1 to wait for the input from the user. If the instruction from the user is to stop the video (S1, video stop), video pickup portion 9 is instructed to stop pickup (S4). Then, the process returns to S1 to wait for the input from the user. If the instruction from the user is to end (S1, end), the whole process ends (S5).

It is noted that the still image may be automatically recorded into still image recording portion 2 in the recording device rather than by the instruction of the user. For example, the still image may be cut out from the video to be recorded into still image recording portion 2 at the start of the video recording and every time a prescribed period of time is elapsed thereafter. When the recording device is stationary video, the still image may be recorded at a timing at which a sound multiplex mode switches in parallel with video recording.

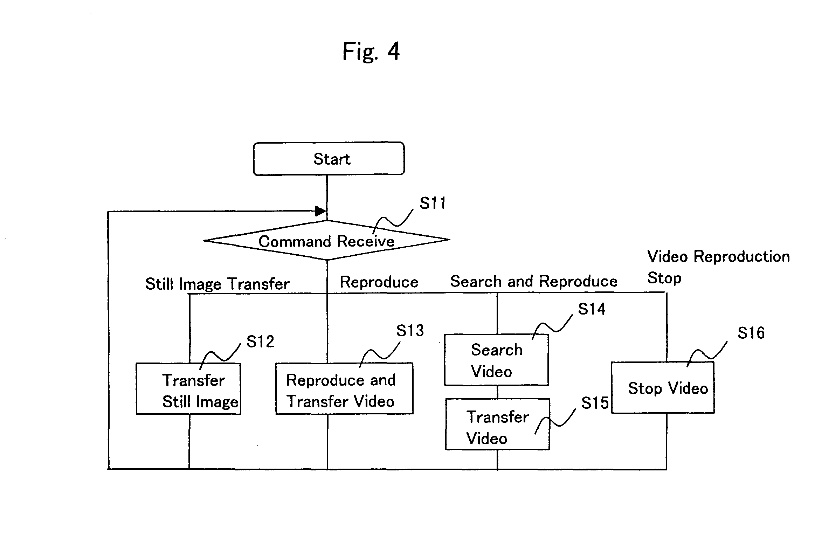

Fig. 4 is a flow chart shown in conjunction with a command receiving process by the recording device according to the present embodiment. When a command is received through communicating portion 5, command interpreting/executing portion 7 interprets the command (S11). If the received command indicates transfer of the still image (S11, still image transfer), command interpreting/executing portion 7 instructs still image transferring portion 7 to transfer the still image in accordance with the command (S12). Then, the process returns to a step S11 to wait for the command to be received. At the time, the positional information (temporal information) recorded along with the still image is also transferred.

If the received command indicates reproduction of the video (S11, reproduction), command interpreting/executing portion 7 instructs video transferring portion 11 to transfer the video corresponding to the command (S13). Then, the process returns to step S11 to wait for the command to be received. The command is used when the starting position for video reproduction is not designated and reproduction is performed starting from the current position.

If the received command indicates video search reproduction (S11, video search reproduction), command interpreting/executing portion 7 instructs video searching portion 8 to search a position in which the video corresponding to the command is recorded (S 14). In the case of a recording medium that allows only sequential access such as a tape, the tape is forwarded or rewinded to a position where the designated video is recorded. In the case of the recording medium that allows random access such as a disk, search is performed based on pointer information such as temporal information.

As will later be described, since the external apparatus issues a command for video search reproduction based on the information relevant to the still image, transferred in a step S12, a video corresponding to the still image can be searched. When video searching portion 8 finishes the video searching operation, command interpreting/executing portion 7 instructs video transferring portion 11 to transfer the video starting from the searched position (S15). The process then returns step S11 to wait for the command to be received. If the received command indicates stop of video reproduction (S11, video reproduction stop), video transferring portion 11 is instructed to stop transferring the video (S16). The process then returns to step S11 to wait for the command to be received.

As described above, according to the recording device of the present embodiment, positional information (temporal information) indicating a correspondence with the video is recorded when the still image is taken and, when the command of still image transfer is received from the external apparatus, the still image and positional information (temporal information) are transmitted to the external apparatus. Thus, the external apparatus can acquire the video corresponding to the still image.

Further, if the still image is automatically recorded in still image recording portion 2 within the recording device, for example by cutting the still image out from the video for recording it to still image recording portion 2, a recording device with excellent operationality can be provided.

### Second Embodiment

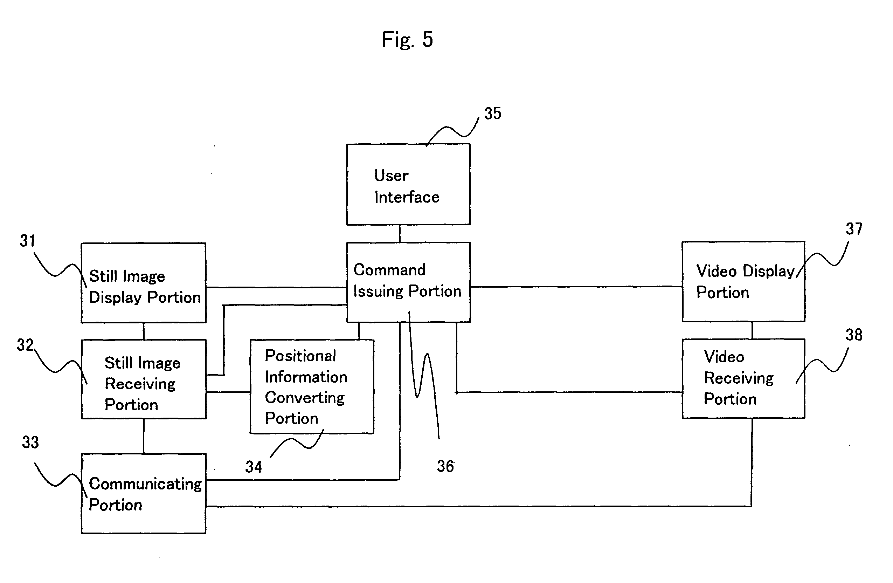

Fig. 5 is a block diagram schematically showing a structure of a reproducing device according to a second embodiment of the present invention. The reproducing device includes: a still image display portion 31 for displaying a still image; a still image receiving portion 32 for receiving the still image from an external apparatus; a communicating portion 33 for data communication with the external apparatus (not shown); a positional information converting portion 34 for converting positional information (temporal information) relevant to the still image received through communicating portion 33 to a recording position on a recording medium on which the video is actually recorded; a user I/F 35 used by a user to input an instruction; a command issuing portion 36 for issuing a command in accordance with the instruction from the user which has been input through user I/F 35; a video display portion 37 for displaying a video; and a video receiving portion 38 for receiving a video from the external apparatus.

Still image display portion 31 is formed for example of a display for displaying a still image received through communicating portion 33 and still image receiving portion 32, and may be used in combination with video display portion 37.

Positional information converting portion 34 converts the positional information (temporal information) of the still image received through communicating portion 33 and still image receiving portion 32 to a position on the recording medium on which the video is actually recorded. For example, when the still image is taken when taking the video by the recording device of the first embodiment, the time at which the still image is taken is recorded in a still image/video position conversion information recording portion 3 as temporal information. If a relative time with respect to the beginning of the tape is recorded when the video is recorded onto the tape, positional information converting portion 34 calculates, from the time at which the still image is taken, a relative time indicating which position on the tape the still image corresponds. It is noted that if the temporal information of the still image and the video are in the same format, positional information converting portion 34 needs not perform conversion of the positional information. Further, the conversion of the positional information may be performed within the recording device of the first embodiment.

Instructions to reproduce/stop the video, select the still image and the like are input to user I/F 35. Command issuing portion 36 issues a command to the recording device of the first embodiment through communicating portion 33 in accordance with the input from user I/F 35.

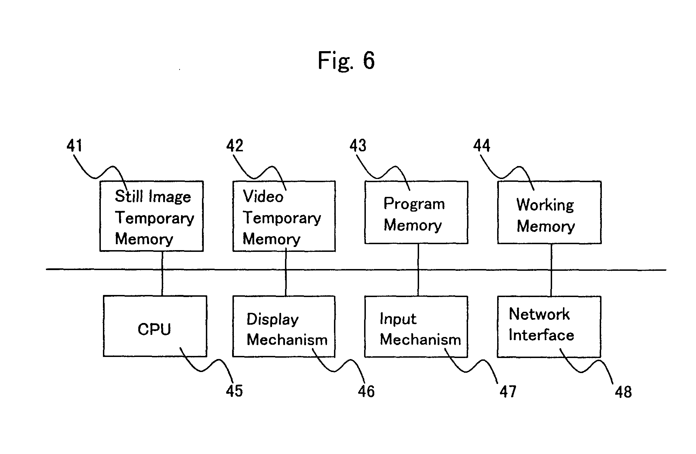

Fig. 6 is a block diagram showing a hardware structure of a reproducing device of the present embodiment. The reproducing device includes: a still image temporary memory 41 for temporarily holding the still image; a video temporary memory 42 for temporarily holding a video; a program memory 43 for storing a program for generally controlling the reproducing device; a working memory 44 used as a work area when the program is executed; a CPU 45 for generally controlling the reproducing apparatus; a display mechanism 46 for displaying the video or still image; an input mechanism 47 operationally instructed by a user; and a network I/F 48.

Display mechanism 46 corresponds to still image display portion 31 and video display portion 37 shown in Fig. 5 and displays the still image, video, operation panel, message and the like. Input mechanism 47 corresponds to user I/F 35 shown in Fig. 5. Network I/F 48 corresponds to communicating portion 33 shown in Fig. 5. When CPU 45 executes the program stored in program memory 43, the functions of still image receiving portion 32, positional information converting portion 34, command issuing portion 36, and video receiving portion 38 are implemented.

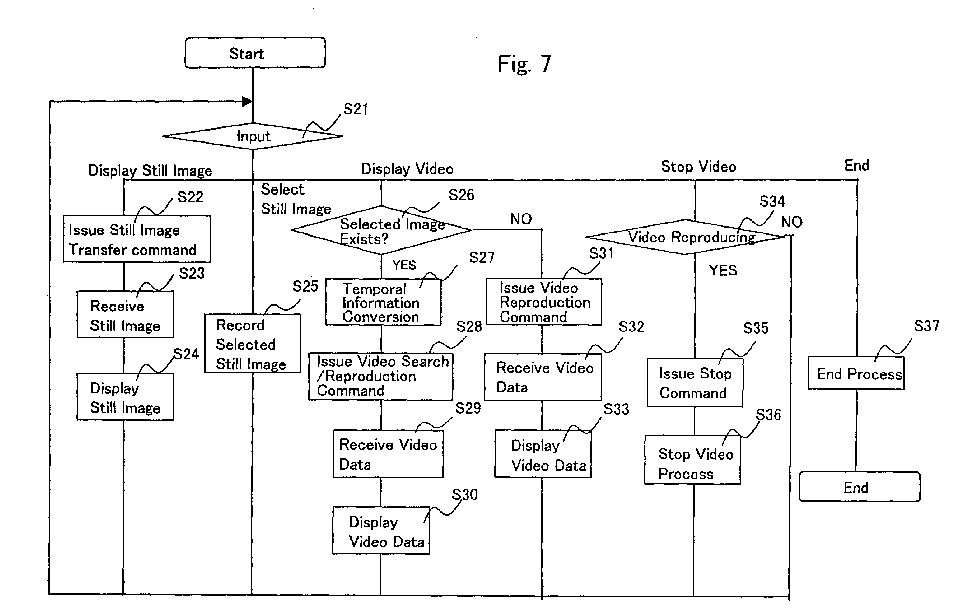

Fig. 7 is a flow chart shown in conjunction with a display process by the reproducing device according to the present embodiment. When an instruction for operation is input through user I/F 35 from a user, the content of the instruction is determined (S21). If the instruction from the user is to display the still image (S21, still image display), command issuing portion 36 issues a command of transferring still image through communicating portion 33 (S22), and receives the still image data from an external recording device through communicating portion 33 (S23). The received still image is displayed onto still image display portion 31 (S24), and the process returns to a step S21 to wait for the instruction from the user. It is noted that, in addition to display of the still image by the instruction of the user, it is also possible to detect connection of a new apparatus to a bus for example in the case of IEEE 1394. Thus, the command of transferring the still image may be automatically issued when the apparatus is connected or the application of the apparatus is started, so that the received still image is displayed.

If the instruction from the user is to select the still image (S21, still image selection), an identification number of the selected still image is stored (S25). Then, the process returns to a step S21 to wait for the input of the instruction from the user. It is noted that the user may set the time before the end of the reproduction when the display of the video corresponding to the selected still image is started. In this case, the command of stopping the video may be issued when a reproduction time set by the user is elapsed after the reproduction is started in a step S30 which will later be described,.

If the instruction from the user is to display the video (S21, video display), a determination is made as to if there is a selected still image (S26). If it is determined that there is a selected still image (S26, Yes), positional information converting portion 34 converts the positional information (temporal information) of the selected still image to the temporal information of the video (S27). Then, command issuing portion 36 issues a command of video search reproduction including the temporal information through communicating portion 33 (S28). It is noted that the command of searching and reproducing the video needs not be a single command, but may be separate commands such as a video search command and a video reproduction command.

When video receiving portion 38 receives video data through communicating portion 33 (S29), video display portion 37 decodes the received video from video receiving portion 38 for display (S30).

If it is determined that there is no selected still image (S26, No), a video reproduction command is issued through communicating portion 33 (S31). When video receiving portion 38 receives the video through communicating portion 33 (S32), video display portion 37 decodes the video received by video receiving portion 38 for display (S33).

If the instruction from the user is to stop the video (S21, video stop), a determination is made as to if the current video is in the process of reproduction (S34). If not (S34, No), the process returns to step S21 to wait for the instruction from the user. If yes (S34, yes), a stop command is issued through communicating portion 33 (S35) to instruct video display portion 37 to stop reproduction of the video (S36). Then, the process returns to step S21 to wait for the instruction from the user. If the instruction from the user is to end (S21, end), the whole process ends (S37).

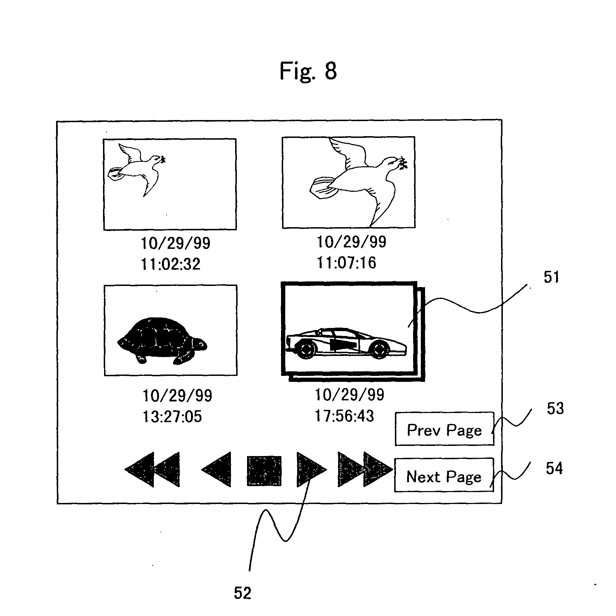

Fig. 8 is a diagram showing an exemplary display process by the reproducing device according to the present embodiment. Fig. 8 shows that the still image recorded by the recording device of the first embodiment is received from the recording device for display. The time of day at which the still image is recorded is displayed below the still image, and it is seen that a still image 51 on the lower right side is selected by the user. In this state, when the user presses reproduction button 52, reproduction of the video corresponding to still image 51, i.e., the car on the lower right side, is started. When the still image extends over several pages, a previous page button 53 and a next page button 54 are used for display of the previous or next page. The still image may be displayed with a smaller thumbnail to display the entire still image on one screen.

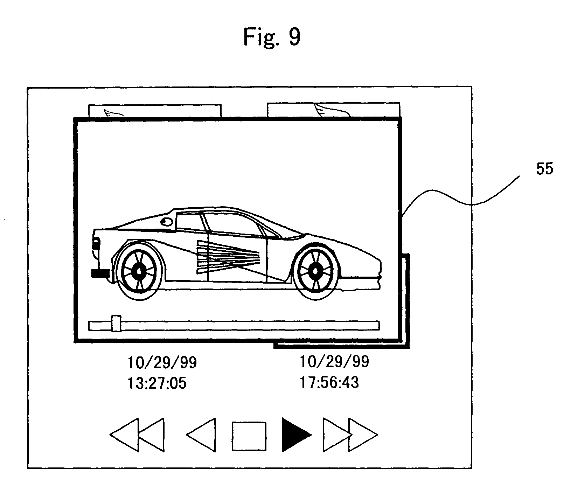

Fig. 9 shows that still image 51 of the car shown in Fig. 8 is selected by the user and a video 55 corresponding to still image 51 is displayed on the screen.

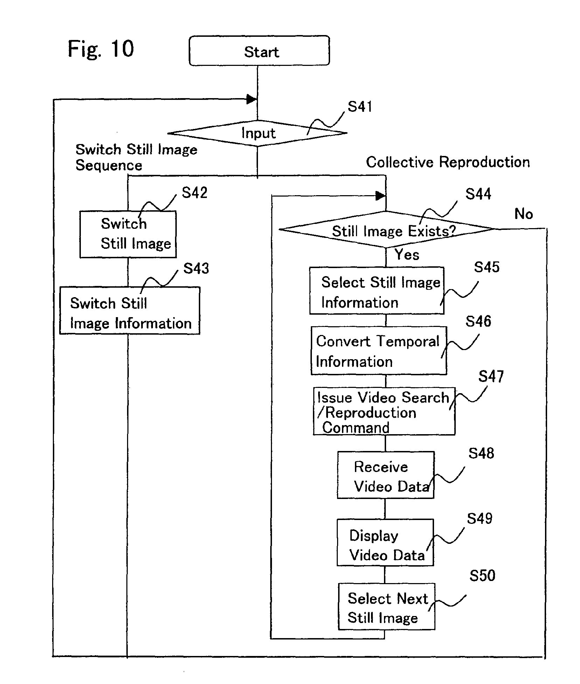

Fig. 10 is a flow chart shown in conjunction with a collective reproduction process of the reproducing device of the present embodiment. First, when an operation instruction is input from the user through user I/F 35, the content of the instruction is determined (S41). If the instruction from the user is to change the arrangement of the still images (S41, change arrangement of still images), still image display portion 31 changes the arrangement of the still images (S42), correspondingly changes the still image information stored in still image temporary memory 41 (S43), and returns to a step S41 to wait for the instruction from the user.

If the instruction from the user through user I/F 35 is to collectively reproduce the videos (S41, collective reproduction), a determination is made as to if there is a still image in still image temporary memory 41 (S44). If it is determined that there is no still image in still image temporary memory 41 (S44, No), the process returns to step S41 to wait for the instruction from the user.

If it is determined that there is a still image in still image temporary memory 41 (S44, Yes), the leading still image information (the next still image information in the following process) is selected (S45), and positional information converting portion 34 produces positional information of the video corresponding to that still image based on the temporal information of that still image (S46). Command issuing portion 36 issues a command of video search reproduction and positional information of the video to the recording device, i.e., an external apparatus, through communicating portion 33 (S47).

When video receiving portion 38 receives video data through communicating portion 44 (S48), video display portion 37 decodes the video data for display (S49). When a reproduction time is set by the user, the process proceeds to the next step S50 when the set reproduction time is elapsed. If the reproduction time is not set, the process may proceed to the next step when a time that has been preliminary set in the reproducing device is elapsed, or when the time stamp matches any of those of the still images.

Then, a pointer is moved to the next still image stored in still image temporary memory 41 (S50), and the process returns to step S44 to repeat the subsequent processes. In the process flow, although the command of video search reproduction corresponding to one still image is repeatedly issued to the recording device for reproduction, the commands of video search reproduction corresponding to a plurality of still images may be collectively issued.

In some of the recent digital video cameras, videos are recorded on a tape and still images are recorded in a flash memory. The correspondence between the videos and still images respectively recorded in the tape and flash memory may be obtained by recording an ID (Identifier) of the tape onto a tape with an IC (Integrated Circuit) memory and also recording the ID in the flash memory, while not particularly limited to this. When the still image and video can be recorded on one medium, no particular problem arises.

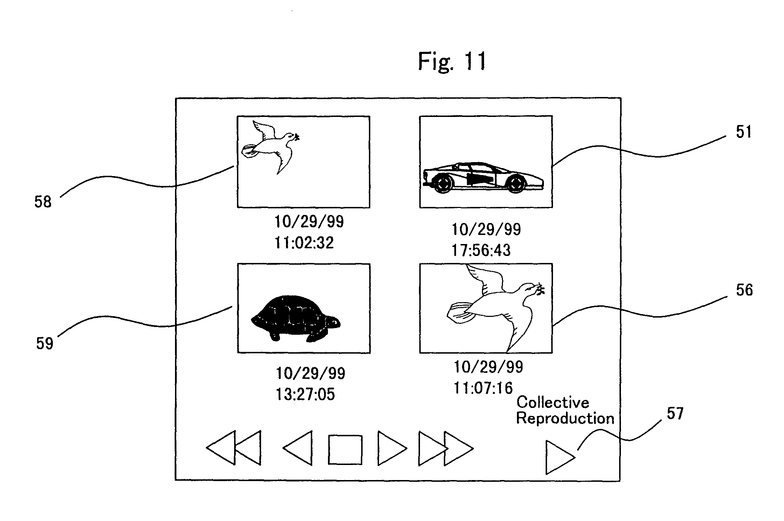

Fig. 11 is a diagram shown in conjunction with an exemplary collective reproduction process of the reproducing device according to the present embodiment. Fig. 11 shows that still image 51 of the car and still image 56 of a large bird shown in Fig. 8 are switched by the user. In this state, when collective reproduction button 57 is pressed, the video corresponding to still image 51 of the car is reproduced after the video corresponding to still image 58 of a small bird is reproduced. Thereafter, the video corresponding to still image 51 of the larger bird is reproduced after the video corresponding to a still image 59 of a turtle is reproduced.

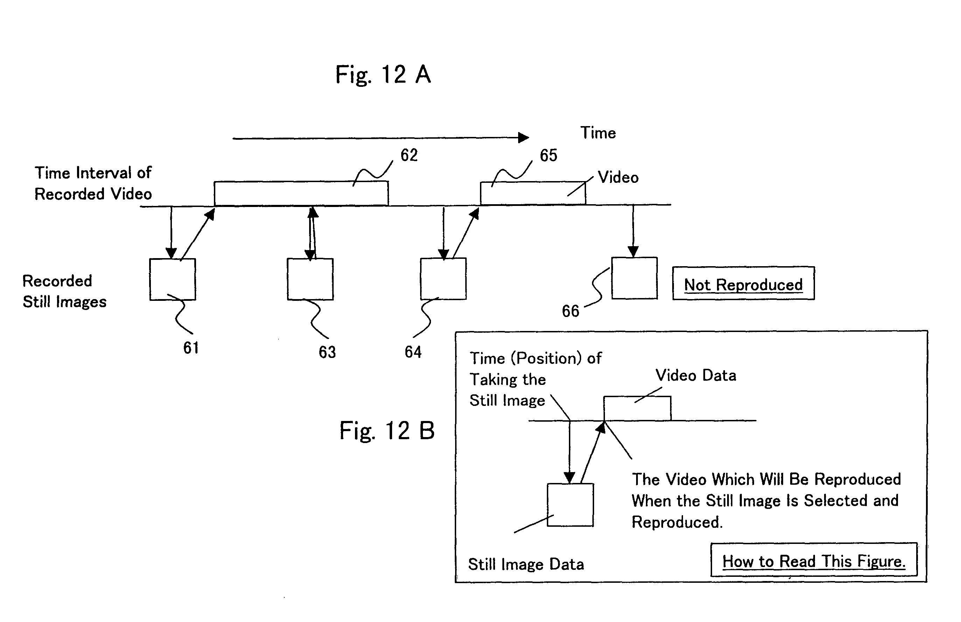

Figs. 12A and 12B are diagrams shown in conjuction with a temporal relationship between still images and videos. Although still images and videos may, in some cases, be simultaneously taken, they are not necessarily taken at the same time. For example, since a video is not taken when a still image 61 shown in Fig. 12A is taken, it is made correspond to the initial position of a video 62 which is taken immediately after that. If still image 63 is taken when taking video 62, the time at which still image 63 is taken is made to correspond to the video taken at that time. It is noted that a video is not taken when a still image 66 is taken and no video is taken thereafter, so that no video would be reproduced even if still image 66 is selected.

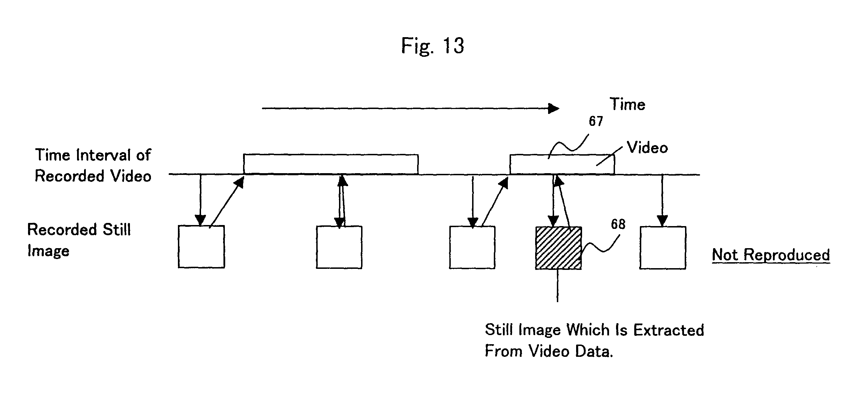

Fig. 13 is a diagram shown in conjunction with the case where a still image is cut out from a video after the video is taken. When the user inputs a request for registering a certain scene as a still image to the reproducing apparatus with reference to the reproduced video 67, that scene is registered as a still image. For example, with provision of a still image cut button in the reproducing device, when that button is pressed during reproduction of video 67, the scene of the currently reproduced video is recorded as a still image into still image temporary memory 41.

Basically, information on the time of day of image pickup is recorded as information relevant to the still image. However, when still image 68 is cut out from video 67, the time of day is calculated back from the temporal information relevant to video 67, which is then recorded to still image temporary memory 41 along with still image 68. In this way, the user can additionally register one scene of the video as a still image. It is noted that, in producing a still image from a video, a still image may be produced in a reproducing device for transmission to the recording device, or a still image may be cut out from a video in the recording device for registration.

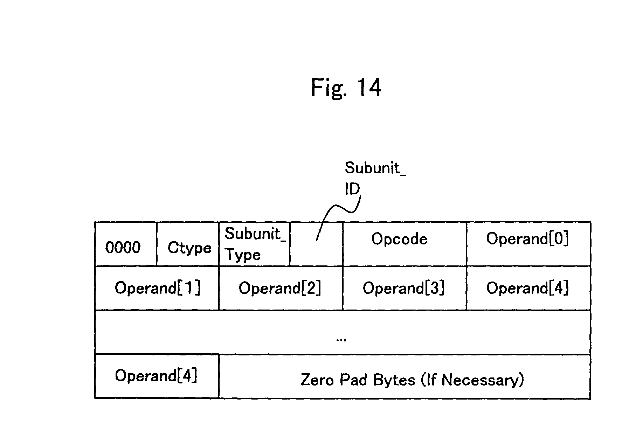

Fig. 14 is a diagram showing an exemplary packet format of a command used for the reproducing device according to the present embodiment. The command is an Audio Visual/Control (AV/C) command for controlling an AV apparatus defined by an organization called 1394 Trade Association (http://www.1394ta.org/). The overall specification of the command set is defined in AV/C Digital Interface Command Set General Specification Version 3.0.

In Fig. 14, ctype in a packet represents types of, for example, a command, response, status, query and the like. subunit_type represents types of relevant apparatuses (camera, tuner and the like). subunit_ID is an ID for subunit_type to identify the same apparatus. Opcode is a code representing the type of the command. Operand[x] represents an argument of command. For example, a combination of opcode and operand[x] can give an instruction to execute a command of, for example, reproduction at triple speed. It is noted that AC/V assumes that transfer is performed by IEEE 1394, and the packet format shown in Fig. 14 is transmitted in a write transaction framework of IEEE 1394.

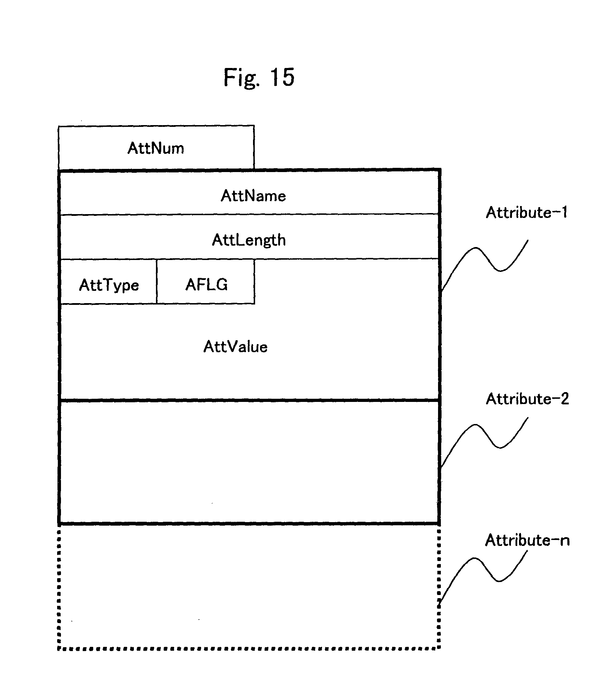

Fig. 15 is a diagram showing a command format of a DPP. The DPP is defined in Direct Print Specification version 1.1 defined by 1394 Trade Association. Fig. 15 shows a format of a file transfer command set of the DPP command. In this format, Attribute representing types of a command or parameter. AttNum represents the number of Attributes to be transmitted, and AttName represents the name for identifying the type of Attribute. AttLength represents the length of Attribute, and AttType represents a format (binary, ASCII and the like) of the data to be actually transferred. In addition, AFLG represents a flag for extension, and AttValue represents data to be actually transferred. For example, in the case of transmitting a file, a command has three Attributes, the first Attribute representing the command of "PUT" indicating transmission of the file. The second Attribute represents the file name, and the third Attribute represents the file data.

By using the above-described AV/C for the command of instructing the start of video reproduction and the like and using the DPP for file transfer, a new protocol or command set needs not be defined, so that the recording device and reproducing device can be readily implemented.

As described above, according to the reproducing device of the present embodiment, the temporal information of the video is produced based on the information which is received with the still image. Accordingly, the user can simply select the still image to reproduce the video corresponding to that still image.

Further, by changing the arrangement of the still images for collective reproduction, the videos can be reproduced in a desired order, whereby a reproducing device with excellent operationality can be provided. Moreover, by using IEEE 1394 as a network, using the DPP for transferring the still images, and further using AV/C for transferring videos, the reproducing device of the present embodiment can be built with existing network, protocol and command set. Thus, the reproducing device can be readily achieved.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A recording device, comprising:
a still image recording portion recording a still image;
a video recording portion recording a video;
an information recording portion recording information on a correspondence between the still image recorded by said still image recording portion and the video recorded by said video recording portion;
a communicating portion communicating with an external apparatus; and
a command executing portion interpreting a command received from the external apparatus through said communicating portion and selectively transmitting the still image, the video and the information respectively recorded by said still image recording portion, said video recording portion and said information recording portion.

2. The recording device according to claim 1, wherein said command executing portion transmits the still image and the information respectively recorded by said still image recording portion and said information recording portion through said communicating portion when a still image transfer command is received through said communicating portion.

3. The recording device according to claim 2, wherein said command executing portion transmits the still image recorded by said still image recording portion in accordance with a Direct Printing Protocol.

4. The recording device according to claim 1, wherein said command executing portion searches the video recorded by said video recording portion and transmits data of the videos starting from the searched video through said communicating portion when a video search reproduction command is received through said communicating portion.

5. The recording device according to claim 4, wherein said command executing portion transmits the video data recorded by said video recording portion by an Audio Visual/Control.

6. The recording device according to claim 1, further comprising a still image producing portion producing a still image by cutting out the still image from the video recorded by said video recording portion.

7. A reproducing device, comprising:
a communicating portion communicating with an external apparatus;
a still image display portion displaying a still image received through said communicating portion; and
a video display portion receiving a video corresponding to the still image displayed by said still image display portion through said communicating portion for display.

8. The reproducing device according to claim 7, further comprising a command issuing portion issuing a command through said communicating portion in accordance with an instruction of a user.

9. The reproducing device according to claim 8, wherein said still image display portion receives still image data and information on a correspondence between the still image data and video through said communicating portion when said command issuing portion issues a still image display command through said communicating portion.

10. The reproducing device according to claim 9, wherein said still image display portion receives said still image data in accordance with a Direct Printing Protocol.

11. The reproducing device according to claim 9, wherein said command issuing portion transmits information on a correspondence between said still image data and said video with said video display command when said command issuing portion issues said video display command through said communicating portion, and
said video display portion receives video data through said communicating portion for display.

12. The reproducing device according to claim 11, wherein said command issuing portion receives said video data by an Audio Visual/Control.

13. The reproducing device according to claim 8, wherein said command issuing portion issues a command of requesting transmission of videos corresponding to the still image through said communicating portion in an order of the still images displayed onto said still image display portion.

14. The reproducing device according to claim 13, further comprising a switching portion switching positions of the still images displayed on said still image display portion.

15. A recording and reproducing apparatus with a recording device and a reproducing device connected through a network, said recording device including:
a still image recording portion recording a still image;
a video recording portion recording a video;
an information recording portion recording information on a correspondence between the still image and the video respectively recorded by said still image recording portion and said video recording portion;
a first communicating portion communicating with said reproducing device; and
a command executing portion interpreting a command received from said reproducing device through said first communicating portion and selectively transmitting to said reproducing portion the still image, the video, and the information respectively recorded by said still image recording portion, said video recording portion, and said information recording portion, and said reproducing device including:
a second communicating portion communicating with said recording device;
a still image display portion displaying said still image received through said second communicating portion; and
a video display portion receiving a video corresponding to the still image displayed by said still image display portion from said recording device through said second communicating portion for display.
